# EUROPÄISCHE PATENTANMELDUNG

(11) **EP 1 690 458 A1**
(43) Veröffentlichungstag der Anmeldung: **16.08.2006**
(21) Anmeldenummer: 06008754.1
(22) Anmeldetag: 22.11.2004
(51) Int. Cl.: A24B 7/14

(54) **Handhabungseinrichtung für Behälter der Tabak verarbeitenden Industrie**

(30) Priorität: 25.11.2003 DE 10355393; 15.09.2004 DE 102004045039
(62) Teilanmeldung aus: 04803216.3
(71) Anmelder: Hauni Primary GmbH, 21493 Schwarzenbek (DE)
(72) Erfinder: Dierken, Hans, 21385 Amelinghausen (DE); Denker, Wolfgang, 21039 Hamburg (DE); Seide, Ulf, 20249 Hamburg (DE); Hagemann, Fritz, 22085 Hamburg (DE); Benz, Wolfgang, 22885 Stemwarde/Barsbüttel (DE)
(74) Vertreter: Grebner, Christian Georg Rudolf

(57) **Zusammenfassung**

Die Erfindung betrifft eine Handhabungsvorrichtung (110) zum Entleeren offener bzw. geöffneter Behälter (114) der Tabak verarbeitenden Industrie mit einer Trageinrichtung (112, 113) für den Behälter (114), die zur Entleerung des Behälters (114) in eine Entleerungsposition drehbar ist, und mit einem Schließdeckel (116) für den Behälter (114), mittels dem der Behälter (114) vor seiner Entleerung verschließbar ist. Die Handhabungseinrichtung (110) wird dadurch weitergebildet, dass in der Entieerungsposition der Schließdeckel (116) linear verschiebbar ist.

Darüber hinaus betrifft die Erfindung ein Automatisierungssystem der Tabak verarbeitenden Industrie, das mit einer Handhabungseinrichtung (110) ausgestattet ist.

## Beschreibung

Die Erfindung betrifft eine Handhabungsvorrichtung zum Entleeren offener bzw. geöffneter Behälter der Tabak verarbeitenden Industrie mit einer Trageinrichtung für den Behälter, die zur Entleerung des Behälters in eine Entleerungsposition drehbar ist, und mit einem Schließdeckel für den Behälter, mittels dem der Behälter vor seiner Entleerung verschließbar ist. Darüber hinaus betrifft die Erfindung ein Automatisierungssystem der Tabak verarbeitenden Industrie.

In der Tabak verarbeitenden Industrie wird Tabakmaterial, z.B. Schnitttabak, Tabakfolie, Rohtabak, Tabakrippen, expandierter Tabak in Behältern gesammelt und zu Maschinen zur Weiterverarbeitung bzw. zur Tabakvorbereitung transportiert. Zur Weiterverarbeitung werden die Behälter mit dem Tabakmaterial umgekippt oder ausgekippt.

Unter der Bezeichnung "TH-T" ist ein Kipper der Patentanmelderin für Behälter mit Schnitttabak, Rippenschnitt, Rohrippen, Kurz- und Aufreißtabak usw. bekannt. Der Kipper besteht aus einer vertikalen, drehbaren Säule mit einem Schwenkbereich von 270° und einem höhenverstellbaren Lastarm. Als Auspacker für Rohtabak ist der Kipper mit einer entsprechenden Greifeinrichtung für die Behälter ausgestattet.

Außerdem wird in der deutschen Anmeldung der Patentanmelderin mit dem Aktenzeichen 103 48 717.4 ein Behälter für Tabakmaterial beschrieben.

Darüber hinaus ist aus DE 298 19 731 U1 eine Vorrichtung zum Entladen offener, deckelloser Behälter mit unverdichteten oder lose verdichteten Tabakballen bekannt.

Der Erfindung liegt die Aufgabe zugrunde, die Handhabung von Behältern für Tabakgut bzw. Tabakmaterial zu erleichtern, wobei es möglich sein soll, den Automatisierungsgrad bei der Beschickung von Maschinen der Tabak verarbeitenden Industrie mit Tabakgut zu erhöhen. Aufgabe der vorliegenden Erfindung ist es weiterhin, die Handhabung von mit Tabakgut befüllten Behältern bei der Entleerung zu verbessern, so dass Beschädigungen des Tabakguts und Staubemissionen bei der Entleerung weitgehend vermieden werden.

Vorzugsweise ist bei einer Handhabungseinrichtung der Tabak verarbeitenden Industrie für Behälter der Tabak verarbeitenden Industrie, insbesondere Tabakbehälter, umfassend ein Greifelement für die Behälter und eine Trageinheit für das Greifelement, das Greifelement höhenverstellbar.

Hierdurch kann die Handhabungseinrichtung mehrere Arbeitspositionen einnehmen, wobei der vertikale Abstand zwischen der Trageinheit und dem Greifelement veränderbar undloder einstellbar ist, so dass das Greifelement in der Höhe verstellbar ist und beispielsweise Behälter aus einer Warteposition oder von einer Transportstrecke entnehmen kann. Dazu ist vorgesehen, dass eine Greifeinrichtung mittels der Trageinheit für das Greifelement und mit dem Greifelement ausgebildet wird. An der Trageinheit ist das Greifelement angeordnet und mit diesem verbunden. Um das Greifelement an der Trageinheit höhenverstellbar auszubilden, ist es möglich, das Greifelement oder die Trageinheit mit einer Pneumatikzylinder-Kolben-Einheit auszustatten. Darüber hinaus sind auch weitere Ausführungsformen des Mittels zur Höhenverstellung des Greifelements mit einem mechanischen Koppelgetriebe, einem elektromechanischen Antrieb, einem elektromotorischen Antrieb oder einem hydraulischen Antrieb denkbar.

Insbesondere ist das Greifelement durch Mittel der Trageinheit höhenverstellbar ist. Dazu ist wird vorgeschlagen, dass das Greifelement mittels einer Pneumatikzylinder-Kolben-Einheit oder eines mechanischen Koppelgetriebes oder eines elektromechanischen Antriebs oder eines elektromotorischen Antriebs oder eines hydraulischen Antriebs höhenverstellbar ist.

Die Trageinheit ist bevorzugterweise oberhalb des Greifelementes angeordnet.

Weiterhin ist in einer Ausführungsform der Handhabungseinrichtung vorgesehen, dass die Trageinheit, insbesondere horizontal, bewegbar ist, so dass die Trageinheit in einer, vorzugsweise horizontalen, Ebene geführt werden kann, während das Greifelement zur Handhabung der Behälter seine relative Höhenlage ändern kann. Es ist auch denkbar, die Höhenänderung durch eine geeignete Bahnführung zu realisieren.

Darüber hinaus ist es vorteilhaft, wenn die Trageinheit und das Greifelement zu einer Position zum Greifen eines Behälters bewegbar sind, um beispielsweise einen Behälter von einem Förderband oder aus einer Warteposition zu ergreifen.

In einer weiteren Ausgestaltung sind die Trageinheit und das Greifelement zu einer Position zur Entleerung eines Behälters bewegbar, so dass das Tabakgut des Behälters zur Weiterverarbeitung bereit gestellt wird.

Außerdem sind bevorzugterweise die Trageinheit und das Greifelement zu einer Position zur Abgabe eines, vorzugsweise leeren, Behälters bewegbar. Anschließend kann das Greifelement einen weiteren Behälter mit Tabakgut greifen und entleeren.

Durch die Bewegbarkeit der Trageinheit und des Greifelements zu den genannten Arbeitspositionen wird erreicht, dass die Handhabungseinrichtung in einem automatisierten Prozess zur Bereitstellung von Tabakgut integriert wird. Insgesamt wird durch die Handhabungseinrichtung der Automatisierungsprozess zur Bereitstellung von Tabakgut an einer Weiterverarbeitungsmaschine verbessert.

Eine günstige Handhabung der Tabakbehälter ergibt sich dadurch, dass das Greifelement zur Aufnahme des Behälters, vorzugsweise horizontal verfahrbar und/oder drehbar ist.

Um Tabakgut in Arbeitsorganen von Maschinen der Tabak verarbeitenden Industrie zuzuführen, ist das Greifelement zum Öffnen eines Behälters vorgesehen bzw. ausgebildet. Hierzu weist das Greifelement einen Öffnungsmechanismus auf, so dass selbsttätig eine Öffnung des Behälters in einer entsprechenden Entleerungsposition des Behälters stattfindet. Insbesondere verfügt das Greifelement über einen Öffnungsmechanismus, um einen Behälter, wie er in der deutschen Anmeldung mit dem Aktenzeichen 103 48 171.4 beschrieben ist, zu öffnen. Der in dieser genannten Anmeldung gezeigte Behälter ist stapelbar bzw. nestbar. Darüber hinaus lässt sich der Behälter im unteren Bereich der Bodenfläche öffnen und schließen.

Um die Trageinheit in einer, vorzugsweise horizontalen, Ebene zu bewegen, ist vorteilhafterweise eine Führungsbahn für die Trageinheit vorgesehen. Die Führungsbahn kann an einer entsprechenden Tragkonstruktion angeordnet sein. In einer weiteren Ausgestaltung kann die Führungsbahn an der Decke einer Halle oder eines Raumes angeordnet sein. Dabei kann die Führungsbahn in sich geschlossen sein. Zweckmäßigerweise ist die Führungsbahn in einer waagerechten Ebene geführt, so dass die Trageinheit ebenfalls in einer horizontalen Ebene bewegbar ist.

In einer alternativen Ausgestaltung wird vorgeschlagen, dass die Trageinheit an einem Rotationskörper angeordnet ist. Mittels des Rotationskörpers, der beispielsweise als Drehsäule verwirklicht ist, wird eine Drehbewegung der Trageinheit und der Greifelemente realisiert, wobei die Trageinheit in einer horizontalen Ebene geführt ist.

Darüber hinaus wird die Handhabungseinrichtung vorteilhafterweise dadurch weitergebildet, dass ein Bewegungsausgleichselement für das Greifelement vorgesehen ist, um beispielsweise die Bewegung eines Behälters beim Greifen von einem Förderband, d.h. bei der Lastaufnahme, zu folgen. Anschließend wird das Greifelement durch geeignete Mittel, wie z.B. separate Antriebe, Federelemente oder dergleichen, wieder in seine Ausgangsstellung zurück gestellt.

Gelöst wird die Aufgabe mittels einer Handhabungsvorrichtung zum Entleeren offener bzw. geöffneter, deckelloser Behälter der Tabak verarbeitenden Industrie mit einer Trageinrichtung für den Behälter, die zur Entleerung des Behälters in eine Entleerungsposition drehbar bzw. bewegbar ist, und mit einem Schließdeckel für den Behälter, mittels dem der Behälter vor seiner Entleerung verschließbar ist, die dadurch weitergebildet wird, dass in der Entleerungsposition der Schließdeckel linear verschiebbar ist.

Durch die lineare Verschiebung des Schließdeckels wird der zu entleerende umgedrehte Behälter im unteren Bereich vollständig geöffnet, so dass das aufgenommene Tabakgut vollständig zum Beispiel auf ein Abförderband gelangt. Nachdem der Schließdeckel vollständig entfernt ist, wird der Behälter angehoben, so dass das Tabakgut, frei auf dem Abförderer liegt. Mittels der Erfindung wird erreicht, dass das im Behälter aufgenommene Tabakgut sanft auf dem Abförderer abgelegt wird, wodurch die Staubemissionen und eine Zerstörung des Tabakguts weitgehend vermieden wird. Durch die erfindungsgemäßen Handhabungsvorrichtungen können auch standardisierte deckellose bzw. geöffnete Behälter entleert werden.

Bevorzugterweise ist der Schließdeckel in der Entleerungsposition des Behälters horizontal ausgerichtet, so dass das Tabakgut schonend auf einem, vorzugsweise horizontalen, Abförderer abgelegt werden kann.

Darüber hinaus ist es vorteilhaft, wenn in der Entleerungsposition der geöffnete Behälter, insbesondere vertikal, anhebbar ist.

Insbesondere ist der Behälter nach vollständiger Entleerung in eine Abgabeposition bringbar, so dass der Behälter z.B. zu einem Förderband für die entleerten Behälter transportiert wird.

Ferner ist bevorzugterweise die Handhabungsvorrichtung Bestandteil eines Portalroboters.

Im Rahmen der Erfindung ist es denkbar, Merkmale der beiden vorgeschlagenen Handhabungsvorrichtungen jeweils in einer vorbestimmten Weise beliebig miteinander zu kombinieren, um weitere vorteilhafte Ausgestaltungen der Handhabungsvorrichtung zu erreichen.

Darüber hinaus wird die Aufgabe gelöst durch ein Automatisierungssystem der Tabak verarbeitenden Industrie, wobei Behälter mit Tabakgut angeliefert werden, die Behälter entleert werden und das Tabakgut Arbeitsorganen der Tabak verarbeitenden Industrie zur Weiterverarbeitung bereitgestellt wird, wobei das System mit einer voranstehend beschriebenen Handhabungseinrichtung ausgestattet ist. Zur Vermeidung von Wiederholungen wird auf die obigen Ausführungen zur Handhäbungseinrichtung ausdrücklich verwiesen.

Die Erfindung wird nachstehend ohne Beschränkung des allgemeinen Erfindungsgedankens unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine perspektivische Darstellung einer Anordnung zur Entleerung von Tabakbehältern;
- Fig. 2: eine weitere Anordnung zur Entleerung von Tabakbehältern mit einer Drehsäule und
- Fig. 3: ein Greifelement in einer schematischen Seitenansicht.
- Fig. 4: schematisch eine Ansicht einer Handhabungsvorrichtung bei der Aufnahme eines Behälters;
- Fig. 5: die Handhabungsvorrichtung in einer Öffnungsposition des Behälters und
- Fig. 6: die Handhabungsvorrichtung in einer Entleerungsposition zur vollständigen Entleerung des Behälters.

In den folgenden Figuren sind jeweils gleiche oder gleichartige Elemente bzw. entsprechende Teile mit denselben Bezugsziffern bezeichnet, so dass von einer entsprechenden erneuten Vorstellung abgesehen wird.

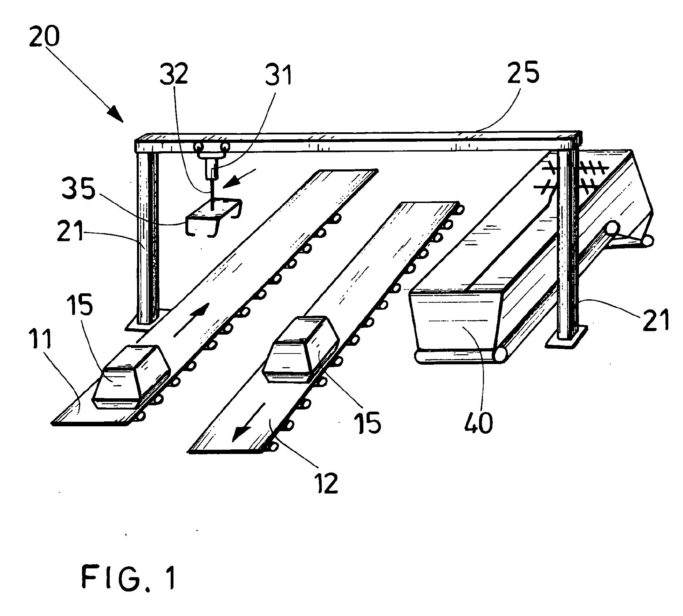

Fig. 1 zeigt schematisch eine Anordnung zur Entleerung von Tabakbehältern. Mit einem Förderband 11 werden mit Tabakgut gefüllte Behälter 15 zu einer Greifanordnung 20 transportiert. Die Greifanordnung 20 verfügt über zwei vertikale Träger 21, zwischen denen eine Laufschiene 25 für eine Greifeinrichtung 30 angeordnet ist.

Die Greifeinrichtung 30 verfügt über eine Trageinheit 31, die mit Rollen versehen ist, so dass die Greifeinrichtung 30 entlang der Laufschiene bewegt wird. Die Trageinheit 31 ist über eine Verbindung 32 mit einem Greifelement 35 gekoppelt. Das Greifelement 35 ist höhenverstellbar ausgebildet, so dass der vertikale Abstand zwischen der Trageinheit 31 und dem Greifelement 35 veränderbar ist.

Wenn ein mit Tabakgut gefüllter Behälter 15 der Anordnung 20 zugefördert wird, wird die Greifeinrichtung 30 in eine Position oberhalb des Behälters 15, der als nächstes von der Greifeinrichtung erfasst werden soll, abgesenkt, so dass das Greifelement 35 in eine Greifposition für den Behälter 15 gebracht wird. Nachfolgend wird der Behälter 15 angehoben und zu einer Anlage 40 der Tabak verarbeitenden Industrie transportiert. Diese Anlage 40 dient zur Weiterverarbeitung des Tabakguts und kann beispielsweise als Beschicker, Zusetzer, Zigarettenmaschine, Lösevorrichtung, Fremdkörperentfernungseinrichtung, Dosiereinrichtung usw. ausgebildet sein. Anschließend wird der Behälter 15 entleert, so dass das Tabakgut sanft in die Anlage 40 gleitet.

Nach der Entleerung des Behälters wird die Greifeinrichtung 30 zusammen mit dem Behälter 15 zurück bewegt, bis der Behälter 15 oberhalb eines Förderbandes 12. zur Abförderung von leeren Behältern 15 positioniert ist. Danach wird der Behälter 15 zusammen mit dem Greifelement 35 abgesenkt. Nach Aufsetzen des Behälters 15 auf dem Förderband 12 wird die Greifverbindung gelöst, so dass der leere Behälter 15 zur weiteren Verwendung bereitgestellt wird.

In einer alternativen Ausgestaltung sind anstelle der Förderbahnen (Bezugszeichen 11, 12) andere Fördereinrichtungen denkbar, mittels denen die Behälter zur Greifanordnung 20 transportiert und von dieser weggefördert werden. Beispielsweise können für die Förderung der Behälter auch Rollbahnen vorgesehen sein.

Um die Greifeinrichtung 30 zu bewegen, ist eine Laufschiene 25 vorgesehen. In einer alternativen Ausführung ist diese Laufschiene 25 an einer Decke eines Raumes oder dergleichen angeordnet. Darüber hinaus kann die Laufschiene 25 geschlossen ausgebildet sein, wobei es vorgesehen ist, dass die Trageinheit 31 von der Laufschiene 25 in einer horizontalen Ebene in einer andersartig ausgebildeten Bahn geführt wird. Um die Behälter 15 anzuheben oder abzusenken, wird das Greifelement 35 angehoben oder abgesenkt.

Darüber hinaus können in einer hier nicht dargestellten Ausführungsform gefüllte Behälter in einer Warteposition unterhalb der Greifanordnung 20 angeordnet sein. Darüber hinaus ist es mittels der Greifanordnung 20 möglich, gestapelte Behälter in der Wartestellung zu erfassen und zu der Anlage 40 zur Weiterverarbeitung des Tabakguts zu transportieren. Aus der Warteposition werden die Behälter einzeln aufgenommen und zu der Anlage 40 gefördert, dort abgesenkt und geöffnet. Zur Entleerung des Behälters 15 wird der Behälter 15 angehoben und dabei der Behälterboden aufgeklappt. Alternativ wäre ein Abziehen des Behälterbodens bei entsprechender Ausbildung denkbar. Anschließend wird der leere Behälter 15 auf einem Förderband (Bezugszeichen 12) zum Abtransport abgesetzt. Dabei können die Behälter 15 durch Drehen des Greifelements 35 um einen bestimmten Winkel, z.B. 90°, in eine für den Transport günstige Richtung gebracht werden.

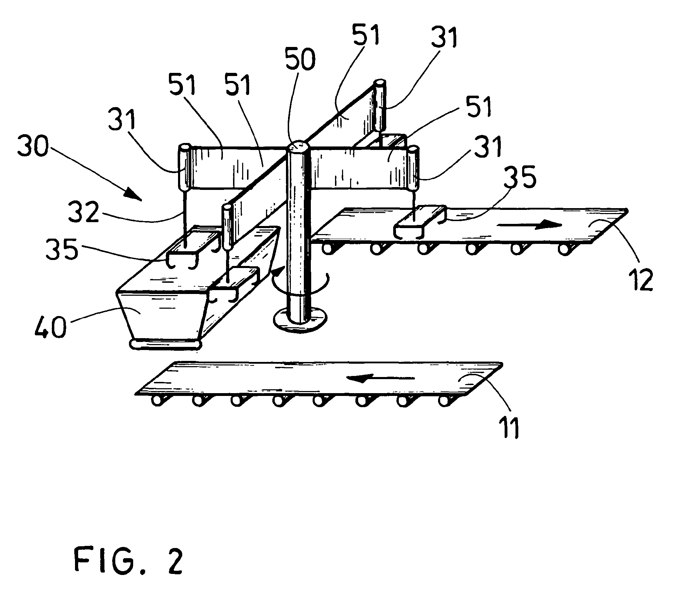

In Fig. 2 ist schematisch eine weitere Anordnung schematisch dargestellt. Bei dieser Ausführungsform sind die Trageinheiten 31 der Greifeinrichtungen an Dreharmen 51 einer rotierenden Drehsäule 50 angeordnet. Diese Drehsäule 50 kann besonders auf herstellungs- und kostengünstige Weise in ihrer Höhe unverstettbar ausgebildet sein und auch sonst keine Mittel zur Höhenverstellbarkeit der Greifelemente 35 aufweisen, da diese über die Trageinheiten 31 höhenverstellbar sind.

Die Behälter 15 werden über das Förderband 11 unterhalb eines Greifelements 35 zur Aufnahme gebracht, von der Greifeinrichtung 30 angehoben und unter Rotation der zentralen Drehsäule 50 zu der Anlage 40 weitergefördert. Bei der Anlage 40 werden die Behälter 15 entleert und nachfolgend unter weiterer Rotation zum Förderband 12 zur Abförderung der geleerten Behälter gebracht.

Gemäß dieser dargestellten Ausführung mit der Drehsäule werden die Trageinheiten 31 ebenfalls in einer horizontalen Ebene bewegt.

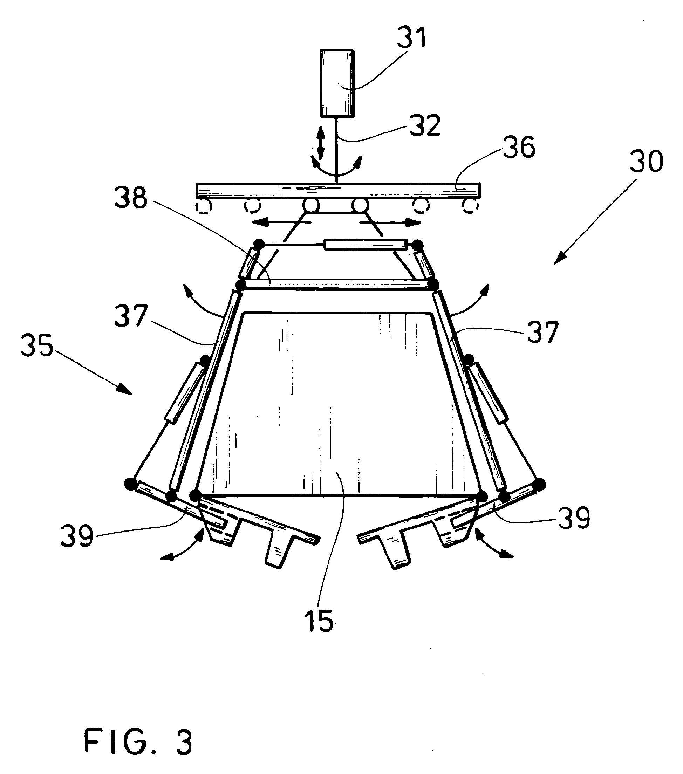

Fig. 3 zeigt im Detail eine Greifeinrichtung 30 in einer Seitenansicht. Die Greifeinrichtung 30 besitzt eine Trageinheit 31, an der das Greifelement 35 angeordnet ist. Das Greifelement 35 verfügt über ein Bewegungsausgleichselement 36, um über einen bestimmten Bereich der Bewegung der Förderbänder zu folgen, so dass ein kontinuierlicher Betrieb der Förderbänder ohne Taktung ermöglicht wird. Eine horizontale Bewegung des Greifelements 35 bei Lastaufnahme kann über einen eigenen Antrieb oder über das Förderband realisiert werden. Nach dem Greifen eines Behälters 15 erfolgt eine Rückstellung des Greifelements 35 in die Ausgangsposition.

Das Greifelement 35 verfügt über bewegbare Greifhebel 37, die an einer Querverbindung 38 miteinander verbunden sind. Jeder Greifhebel 37 weist an seinem Ende einen Hebel 39 auf, die in Eingriff mit Ausnehmungen im Fußteil des Behälters 15 sind. Es wird ausdrücklich auf die deutsche Patentanmeldung mit dem Aktenzeichen 103 48 717.4 verwiesen, in der ein Behälter für Tabakmaterial beschrieben ist. Der Offenbarungsgehalt dieser Patentanmeldung ist ausdrücklich in die vorliegende Patentanmeldung aufgenommen.

Durch die Bewegung der Hebel 39 werden die Bodenteile des Behälters 15 geöffnet, so dass der Inhalt des Behälters 15 nach unten austritt.

Darüber hinaus ist es denkbar, dass am Greifelement 35 auch ein Entriegelungsmechanismus für den Behälter 15 vorgesehen ist, wenn der Behälter 15 mit einer entsprechenden Verriegelung ausgestattet ist.

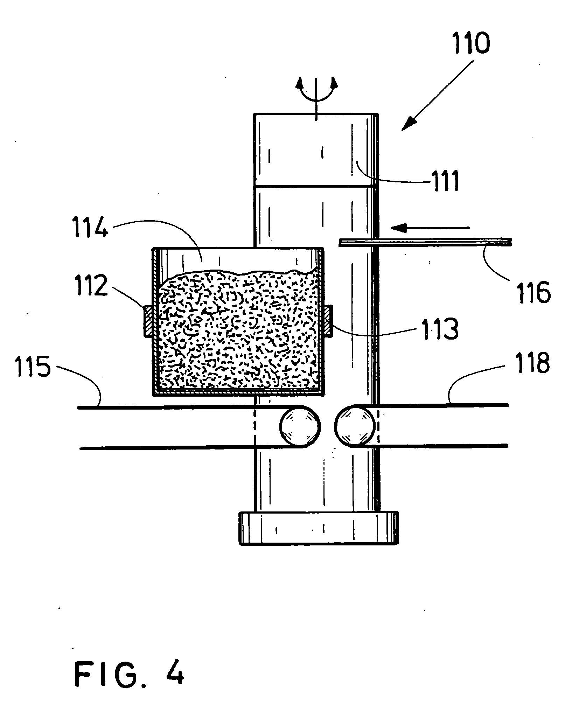

Figur 4 zeigt eine Ansicht einer Handhabungsvorrichtung 110, die beispielsweise mittels eines Portalroboters ausgebildet ist. Die Handhabungsvorrichtung 110 weist eine vertikale drehbare Säule 111 auf, an der bewegbare Lastarme 112, 113 zur Aufnahme eines Behälters angeordnet sind. Der Behälter 114 wird über ein Förderband 115 der Handhabungsvorrichtung 110 zugefördert und in einer Aufnahmeposition mittels der Lastarme 112, 113 gegriffen. Hierzu sind die Lastarme 112, 113 beweglich an der Handhabungsvorrichtung 110 angeordnet.

Darüber hinaus verfügt die Handhabungsvorrichtung 110 über einen horizontal verschiebbaren Schließdeckel 116 im Bereich oberhalb der Oberseite des Behälters 114, so dass der geöffnete bzw. deckellose Behälter 114 nach Erfassen des Behälters 114 mittels der als Trageinrichtung ausgebildeten Lastarme 112, 113 durch eine horizontale Verschiebung des Schließdeckels 116 verschlossen wird. In einer weiteren Ausgestaltung werden der Behälter 114 und der Schließdeckel 116 gegeneinander verpresst, so dass der Behälter 114 abgedichtet ist.

Anschließend wird der Behälter 114 um eine Drehachse um 180° gedreht, so dass der Schließdeckel 116 nun die Bodenfläche bildet. Die Drehachse befindet sich im Mittenbereich des Behälters 114, so dass bei der Drehbewegung nur geringe Drehmomente aufgewendet werden müssen.

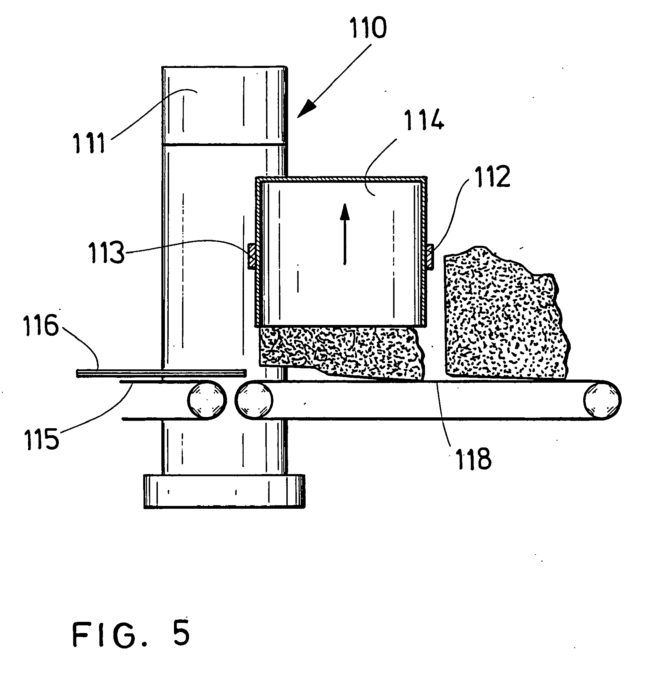

In Figur 5 ist dargestellt, dass nach einer Drehung des Behälters 114 mit dem darin angeordneten Tabakgut der Behälter 114 in eine Tabak-Entnahmeposition über bzw. auf einem Förderband 118 angeordnet wird. Hierzu wird der Behälter 114 mit dem Schließdeckel 116 auf dem Förderband 118 abgesetzt. Nach dem Aufsetzen wird der Schließdeckel 116 durch eine lineare Verschiebung mittels nicht dargestellter Funktionselemente der Handhabungsvorrichtung 110 entfernt, so dass der untere Bereich des Behälters 114 geöffnet wird.

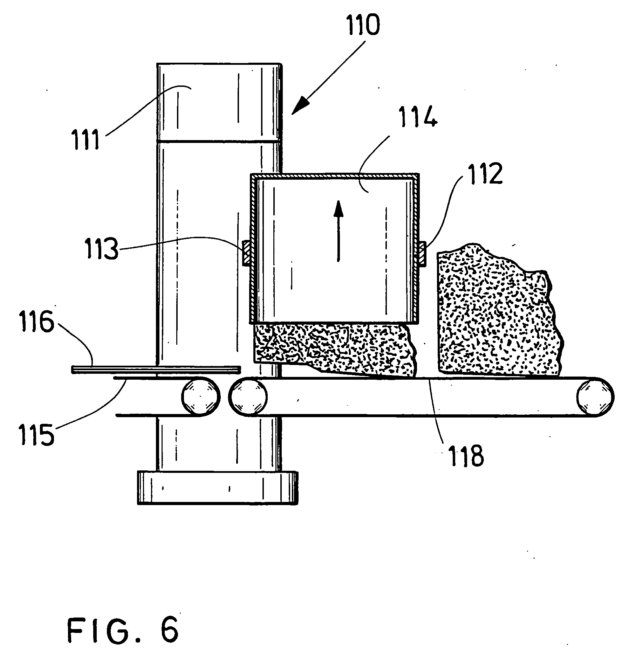

Nach dem vollständigen Entfernen bzw. Herausziehen des Schließdeckels 116 liegt das im Behälter 114 angeordnete Tabakgut vollständig auf dem Förderband 118 auf, und der Behälter 114 wird mittels der fahrbaren Lastarme 112, 113 angehoben wird. Dies ist in Figur 6 dargestellt.

Nach vollständiger Entleerung des Behälters 114 wird der Behälter 114 in eine Abgabeposition mittels der Handhabungsvorrichtung 110 gebracht, so dass nachfolgend die Lastarme 112, 113 einen weiteren mit Tabakgut gefüllten Behälter 114 aufnehmen können (vergleiche Figur 4).

### Bezugszeichenliste

- 11: Förderband
- 12: Förderband
- 15: Behälter
- 20: Greifanordnung
- 21: Träger
- 25: Laufschiene
- 30: Greifeinrichtung
- 31: Trageinheit
- 32: Verbindung
- 35: Greifelement
- 36: Bewegungsausgleichselement
- 37: Greifhebel
- 38: Querverbindung
- 39: Hebel
- 40: Anlage
- 50: Drehsäule
- 51: Dreharm
- 110: Handhabungsvorrichtung
- 111: Säule
- 112: Lastarm
- 113: Lastarm
- 114: Behälter
- 115: Förderband
- 116: Deckel
- 118: Förderband

## Patentansprüche

1. Handhabungsvorrichtung (110) zum Entleeren offener bzw. geöffneter Behälter (114) der Tabak verarbeitenden Industrie mit einer Trageinrichtung (112, 113) für den Behälter (114), die zur Entleerung des Behälters (114) in eine Entleerungsposition drehbar ist, und mit einem Schließdeckel (116) für den Behälter (114), mittels dem der Behälter (114) vor seiner Entleerung verschließbar ist, **dadurch gekennzeichnet, dass** in der Entleerungsposition der Schließdeckel (116) linear verschiebbar ist.

2. Handhabungsvorrichtung (110) nach Anspruch 1, **dadurch gekennzeichnet, dass** der Schließdeckel (116) in der Entleerungsposition des Behälters (114) horizontal ausgerichtet ist.

3. Handhabungsvorrichtung (110) nach Anspruch 1 oder 2, **dadurch gekennzeichnet, dass** in der Entleerungsposition der geöffnete Behälter (114), insbesondere vertikal, anhebbar ist.

4. Handhabungsvorrichtung (110) nach einem der Ansprüche 1 bis 3, **dadurch gekennzeichnet, dass** der Behälter (114) nach vollständiger Entleerung in eine Abgabeposition bringbar ist.

5. Handhabungsvorrichtung (110) nach einem oder mehreren der Ansprüche 1 bis 4, **dadurch gekennzeichnet, dass** die Handhabungsvorrichtung (110) Bestandteil eines Portalroboters (110) ist.

6. Automatisierungssystem der Tabak verarbeitenden Industrie, wobei Behälter (15) mit Tabakgut angeliefert werden, die Behälter (15) entleert werden und das Tabakgut Arbeitsorganen der Tabak verarbeitenden Industrie (40) zur Weiterverarbeitung bereitgestellt wird, mit einer Handhabungseinrichtung (110) nach einem der Ansprüche 1 bis 5.
